# EUROPÄISCHE PATENTSCHRIFT

(11) **EP 2 202 152 B1**
(45) Veröffentlichungstag und Bekanntmachung des Hinweises auf die Patenterteilung: **09.10.2013**
(21) Anmeldenummer: 09010685.7
(22) Anmeldetag: 19.08.2009
(51) Int. Cl.: B64D 27/08, B64D 27/14, B64D 35/00, B64D 33/02

(54) **Flugzeug mit einer Heck-Propeller-Triebwerksanordnung**
Airplane with a rear propeller engine assembly
Avion doté d'un agencement de turbine à l'hélice arrière

(30) Priorität: 23.12.2008 DE 102008062813
(43) Veröffentlichungstag der Anmeldung: 30.06.2010
(73) Patentinhaber: Rolls-Royce Deutschland Ltd & Co KG, 15827 Blankenfelde-Mahlow (DE)
(72) Erfinder: Negulescu, Dimitrie, Dr., 14163 Berlin (DE)
(74) Vertreter: Weber, Joachim

(56) Entgegenhaltungen:
- GB-A- 2 120 623
- US-A- 4 456 204
- US-A1- 2006 011 780

## Beschreibung

Die Erfindung bezieht sich auf eine Flugzeug-Propeller-Triebwerksanordnung sowie ein Flugzeug mit einer Flugzeug-Propeller-Triebwerksanordnung am Heck des Rumpfes eines Flugzeugs.

Der Stand der Technik beschreibt Heckinstallationen bei Turboprop-Flugzeugen. Dabei ist es bekannt, die Triebwerksgondeln von Fluggasturbinen, welche in üblicher Weise mit einer Propellereinrichtung verbunden sind, beidseitig des Rumpfes anzuordnen.

Hieraus ergeben sich erhebliche Nachteile, da die Pylonen, welche die Triebwerksgondeln und damit die Triebwerke tragen, starken Belastungen ausgesetzt sind. Zudem ergibt sich ein hohes Gewicht der Pylonen. Diese weisen installationsbedingt eine kleine Sehne sowie eine große Installationstiefe auf.

Um die benötigten Kräfte zu übertragen, werden sehr kräftige Triebwerksaufhängungen benötigt, die auch eine entsprechende Rumpfstruktur erfordern. All dies erhöht das Gewicht des Flugzeuges.

Durch die Zusammenwirkung der Nachlaufströmung vom Pylon mit Pusher-Propellern ergeben sich unangenehme Geräuschwerte. Weiterhin sind Pusher-Propeller im Bereich der Heißgase/Abgase der Fluggasturbine angeordnet. Auch dies erhöht die Lärmemissionen und senkt zudem die Lebensdauer der Propellerblätter.

Weiterhin erweist es sich bei den vorbekannten Konstruktionen als nachteilig, dass große und damit auch schwere ÖI/Luft-Kühleinrichtungen benötigt werden, um die Gesamtstruktur der Aufhängung des Antriebes und der Einstellmechanismen für die Verstellung der Propellerblätter von der Wärmewirkung des Heißgases zu schützen.

Diese störanfälligen Installationen bedingen weiterhin kurze Betriebszeiten zwischen den jeweils vorgeschrieben Grundüberholungen. Insgesamt ist die Zuverlässigkeit eines derartigen Antriebssystems mit großen, freitragenden und umlaufenden Komponenten mangelhaft.

Die US 2006/0011780 A1 beschreibt eine Triebwerksanordnung eines Flugzeugs, wobei im vorderen Bereich eines Rumpfes ein Gasturbinentriebwerk angeordnet ist, dessen Abtriebswelle über seitliche Nebenwellen und Kegelradgetriebe jeweils einen Fan antreibt. Die beiden Fans sind jeweils in einer Triebwerksgondel seitlich des Rumpfes angeordnet, wobei die Triebwerksgondel jeweils über einen Pylon mit dem Rumpf verbunden ist.

Aus der GB 2120623 A ist eine Ausgestaltung eines Flugzeugs mit einer Heck-Propeller-Triebwerksanordnung vorbekannt. Bei dieser Heck-Propeller-Triebwerksanordnung sind im hinteren Bereich des Rumpfes zwei Triebwerke angeordnet, deren Abtriebswellen jeweils über ein Untersetzungsgetriebe einen Propeller antreiben. Die beiden Propeller sind jeweils an einer Gondel am hinteren Bereich des Flugzeugrumpfes angeordnet, während die Triebwerke vor den Propellern in der jeweiligen Gondel installiert sind. Der Lufteinlass für jedes Triebwerk liegt dabei am Anströmbereich der Gondel, der Luftauslass befindet sich seitlich an der Gondel vor dem Propeller.

Der Erfindung liegt die Aufgabe zugrunde, eine Flugzeug-Propeller-Triebwerksanordnung der eingangs genannten Art zu schaffen, welche bei einfachem Aufbau und einfacher, kostengünstiger Herstellbarkeit die Nachteile des Standes der Technik vermeidet und insbesondere bei geringen Lärmemissionen reduzierte strukturelle Maßnahmen erfordert.

Erfindungsgemäß wird die Aufgabe durch die Merkmalskombination des Anspruchs 1 gelöst, die Unteransprüche sowie die nebengeordneten Ansprüche zeigen weitere vorteilhafte Ausgestaltungen der Erfindung.

Erfindungsgemäß ist somit vorgesehen, dass bei der Flugzeug-Propeller-Triebwerksanordnung eine Trennung zwischen dem Triebwerk und der Propeller-Einrichtung erfolgt. Das Triebwerk ist erfindungsgemäß im Heckbereich des Rumpfes des Flugzeugs angeordnet, so dass hierfür keine Gondeln oder Pylonen verwendet werden müssen. Erfindungsgemäß wird die Leistung des Triebwerks über eine Übergangswelle von der Welle des Triebwerks abgenommen, und auf ein Getriebe und dann auf eine Propellerwelle der Propeller-Einrichtung übertragen.

Erfindungsgemäß ist es somit möglich, das Triebwerk an geeigneter Stelle im Heck des Rumpfes des Flugzeugs anzuordnen.

Erfindungsgemäß kann die Propeller-Einrichtung ebenfalls an günstiger Stelle im Heckbereich des Flugzeugrumpfes angeordnet werden. So ist es beispielsweise möglich, die Propeller-Einrichtung in einer Gondel anzuordnen, welche über einen Pylon mit dem Rumpf des Flugzeugs verbunden ist. Dabei ergibt sich der Vorteil, dass die Gondel nur einen sehr geringen Querschnitt aufweisen muss, welcher im Wesentlichen lediglich dem Nabenquerschnitt oder Nabendurchmesser der Propeller-Einrichtung entspricht. Es treten somit günstige Strömungsverhältnisse auf, so dass die Propellerströmung insgesamt nicht negativ beeinträchtigt wird. Zudem hat der Pylon lediglich das Gewicht der Gondel der Propeller-Einrichtung zu tragen und kann dementsprechend klein und strömungsgünstig dimensioniert werden Besonders günstig ist es, wenn erfindungsgemäß die Propeller-Einrichtung einen gegenläufigen Doppelpropeller umfasst, es ist jedoch auch möglich, lediglich einen einzelnen Propeller (Single-Rotor) vorzusehen.

In besonders günstiger Ausgestaltung der Erfindung ist vorgesehen, dass symmetrisch zur Längsachse des Flugzeuges zwei derartige Propeller-Einrichtungen vorgesehen sind. Diese werden von jeweils einem eigenen Triebwerk angetrieben.

In besonders günstiger Ausgestaltung der Erfindung ist weiter vorgesehen, dass die Gondel der Propeller-Einrichtung um ihre Querachse schwenkbar ist. Die Schwenkung kann beispielsweise in einem Bereich von ± 10° erfolgen. Dies führt durch die dabei auftretende Propellerschubvektorisierung zu verbesserten Flugeigenschaften, insbesondere zu einer Flugoptimierung mit kurzen Rollstrecken und einem sparsamen Reiseflug. Die Verstellung kann beispielsweise hydraulisch erfolgen.

Gemäß der Erfindung ist vorgesehen, dass in der Gondel ein Untersetzungsgetriebe angeordnet ist, welches von der Übergangswelle angetrieben wird und mit der Propellerwelle verbunden ist. Durch die dabei auftretende höhere Drehzahl der Übergangswelle kann diese geringer dimensioniert sein, als eine vergleichsmäßig langsamer laufende Welle.

Gemäß der Erfindung ist der Lufteinlass des Triebwerks in den Pylonen ausgebildet. Dies führt zu einer strömungsgünstigen Ausgestaltung und verringert die Gesamtbaugröße. Weiterhin ist der Abgasauslass des Triebwerkes im Heck des Rumpfes des Flugzeuges angeordnet und beispielsweise in Form einer Düse ausgebildet so dass sich hierdurch eine weitere Vorschubkomponente ergibt.

Die Propeller-Einrichtung kann erfindungsgemäß als Traktorpropeller-Einrichtung (ziehend) oder als Pusher-Propellereinrichtung (drückend) ausgebildet sein. Dies bedeutet, dass die Propeller in Strömungsrichtung vor der Gondel oder nach der Gondel angeordnet werden können.

Hinsichtlich der Ausgestaltung des Triebwerks ist erfindungsgemäß eine Vielzahl von Variationen möglich. Das Triebwerk kann als Fluggasturbine ausgebildet sein, es kann in Form eines Kolbenmotors oder eines Wankelmotors ausgebildet sein, es sind jedoch auch andere Antriebe, beispielsweise ein Kernreaktorantrieb, möglich.

Im Folgenden wird die Erfindung anhand von Ausführungsbeispielen in Verbindung mit der Zeichnung beschrieben. Dabei zeigt:
- Fig. 1: eine schematische Seitenansicht eines ersten Ausführungsbeispiels der Erfindung in Traktorpropeller-Anordnung,
- Fig. 2: eine Darstellung, analog Fig. 1, in Pusherpropeller-Anordnung,
- Fig. 3: eine Anordnung, analog Fig. 3, einer weiteren Ausgestaltungsvariante, und
- Fig. 4: eine vereinfachte Teil-Frontansicht eines erfindungsgemäß ausgebildeten Flugzeuges.

Bei den unterschiedlichen Ausführungsbeispielen sind gleiche Teile mit gleichen Bezugsziffern versehen.

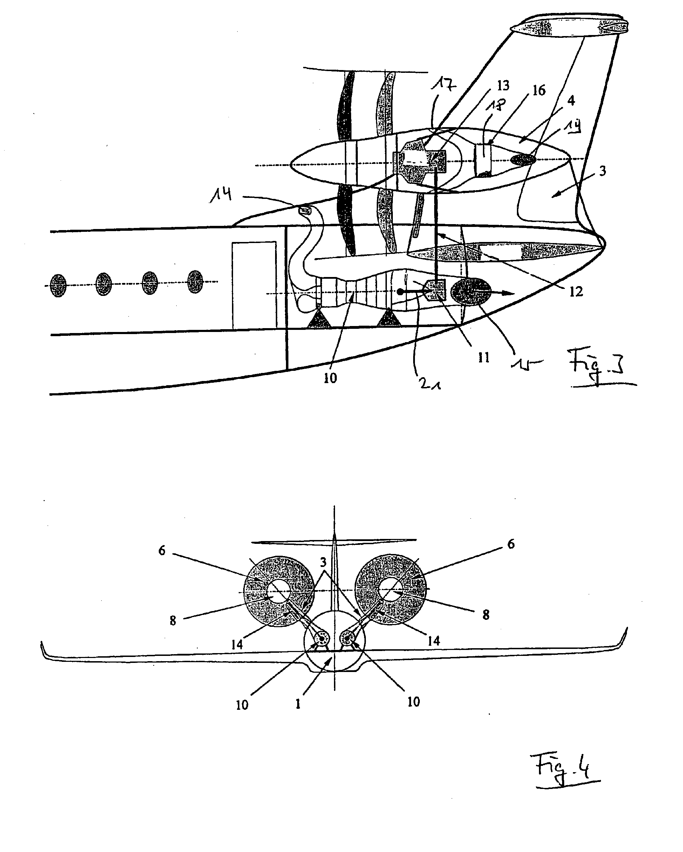

Die Figuren zeigen zunächst einen hinteren Bereich eines Flugzeugrumpfes 1 mit einem Flugzeugheck 2. An dem Flugzeugheck sind, analog der Darstellung der Fig. 4, zwei seitliche, in bevorzugter Ausgestaltung in einem Winkel angeordnete Pylone 3 befestigt. Diese tragen Gondeln 4.

Die jeweilige Gondel 4 lagert eine Propeller-Einrichtung, welche bei den gezeigten Ausführungsbeispielen einen vorderen Propeller 6 und einen hinteren Propeller 7 umfasst, die gegenläufig rotieren. Den Propellern ist eine vordere Nabe 8 bzw. eine hintere Nabe 9 zugeordnet.

Die beiden nicht dargestellten Propellerwellen sind jeweils mit einem Propeller-Untersetzungsgetriebe 13 verbunden, welches in der Gondel 4 angeordnet ist.

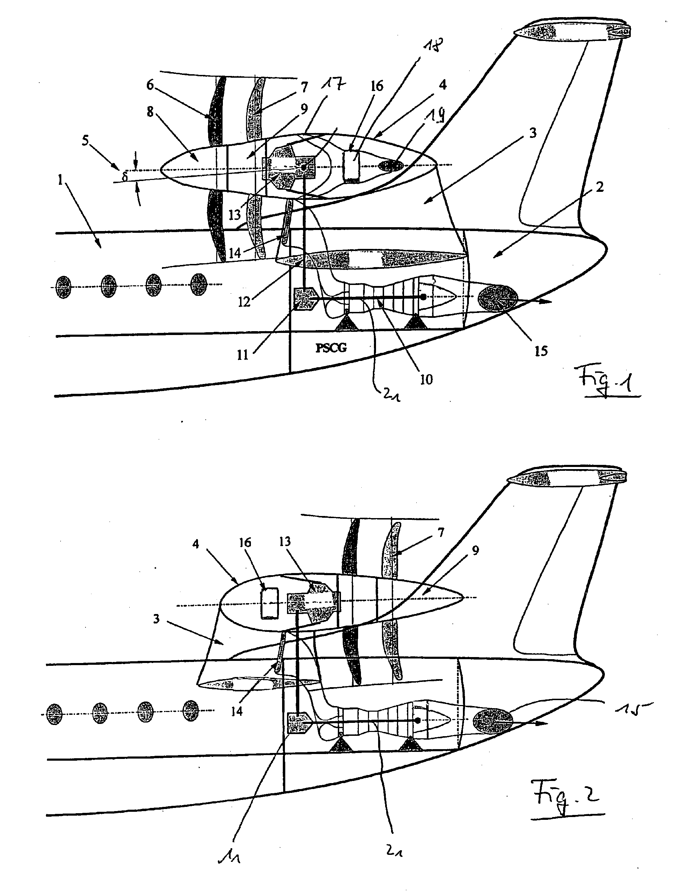

Die Fig. 1 zeigt ein Ausführungsbeispiel, bei welchem die Arbeitsturbinenwelle 21 nach vorne verlängert ist und über ein Kegelgetriebe 11 eine Übergangswelle 12 antreibt. Es ist somit eine Traktor-Propeller-Anordnung gezeigt, bei welcher die Welle der Gasturbine nach vorne verlängert ist.

Im Gegensatz hierzu zeigt die Fig. 3 ein Ausführungsbeispiel, bei welchem bei einer Traktor-Propeller-Anordnung die Turbinenwelle direkt nach hinten verlängert ist und mit dem Kegelgetriebe verbunden ist.

Die Figuren zeigen weiterhin ein Ölsystem 16 der Propellereinheit mit einem Lufteinlass 17, einem Kühler 18 sowie einem Luftauslass 19. Dies ist insbesondere in den Fig. 1 und 3 dargestellt, während die Fig. 2 lediglich eine schematische Darstellung des Ölsystems wiedergibt.

Die Fig. 1 zeigt in schematischer Weise, dass die gesamte Gondel 4 schwenkbar ist, so dass ein Anstellwinkel δ der Propellerachse zur Flugzeugachse variiert werden kann. Der Anstellwinkel δ kann ± 10° betragen. Die Verschwenkung erfolgt bevorzugter Weise um die Querachse der Gondel, wobei diese senkrecht zu einer durch die Propellerachse definierten Längsachse angeordnet ist. Bei dem gezeigten Ausführungsbeispiel (siehe Fig. 4) erfolgt eine Verschwenkung oder Drehung um die Achse der Übergangswelle 12. Insofern zeigt die Fig. 1 lediglich den in die Bildebene projizierten Anstellwinkel δ.

Die Fig. 1 bis 3 zeigen weiterhin zwei Wellenleistungstriebwerke 10 in Form einer Fluggasturbine, welche im Flugzeugheck 2 angeordnetsind. Gemäß Fig. 4 sind zwei derartige Wellenleistungstriebwerke vorgesehen, welche jeweils eine der Propeller-Einrichtungen antreiben.

Das Wellenleistungstriebwerk 10 weist eine Triebwerkswelle 21 auf, welche über ein Kegelgetriebe 11 mit einer Übergangswelle 12 verbunden ist. Diese Übergangswelle 12 wiederum ist mit dem Propeller-Untersetzungsgetriebe 13 verbunden.

Erfindungsgemäß kann die Leistungsübertragung vom Triebwerk 10 mechanisch erfolgen, so wie dies in den Figuren dargestellt ist. Es ist jedoch auch möglich, eine elektrische Antriebskopplung mit einem Generator oder einem Motor vorzusehen. Alternativ hierzu ist auch eine hydraulische Antriebskopplung mit einer Pumpe und einer Turbine sowie einem zugehörigen Hydraulikkreislauf möglich.

Die Figuren zeigen weiterhin einen Triebwerkseinlass 14 (Lufteinlass) sowie eine Triebwerksdüse 15 (Abgasauslass). Der Triebwerkseinlass (Lufteinlass) 14 ist bevorzugterweise im vorderen Strömungsbereich der Pylone 3 vorgesehen.

Erfindungsgemäß ist es möglich, die Propeller in unterschiedlicher Weise auszubilden. Die Ausführungsbeispiele zeigen gegenläufige Propeller, es sind jedoch auch einzelne Propeller (Single-Rotor-Propeller) möglich oder Propfans, unabhängig von der Auslegungs-Flugmach-Zahl. Somit können Turbopropeller für Anwendung für Mn < 0,5 oder auch Propfans für Anwendungen mit Mn > 0,5 vorgesehen sein.

Die Erfindung zeichnet sich durch eine hohe Zuverlässigkeit und eine mit einem geringen Gewicht versehene Aufhängung mittels der Pylonen 3 auf. Hierdurch ergibt sich ein niedriger Installationswiderstand. Die Schallemissionen können erfindungsgemäß erheblich reduziert werden. Durch die Schubvektorisierung durch Drehung um die Achse der Welle 12 kann eine Flugzyklusoptimierung erfolgen, so dass sich umweltschonende Aspekte ergeben.

### Bezugszeichenliste

- 1: Flugzeugrumpf
- 2: Flugzeugheck
- 3: Pylone
- 4: Gondel
- 5: Anstellwinkel der Propellerachse zur Flugzeugachse
- 6: Vorderer Propeller
- 7: Hinterer Propeller
- 8: Vordere Nabe
- 9: Hintere Nabe
- 10: Wellenleistungs-Triebwerk / Fluggasturbine
- 11: Kegelgetriebe
- 12: Übergangswelle
- 13: Propeller-Untersetzungsgetriebe
- 14: Triebwerkseinlass / Lufteinlass
- 15: Triebwerksdüse / Abgasauslass
- 16: Ölsystem der Propellereinheit
- 17: Lufteinlass
- 18: Kühler
- 19: Luftauslass
- 21: Triebwerkswelle

## Patentansprüche

1. Flugzeug mit einer Heck-Propeller-Triebwerksanordnung mit zumindest einem im Heck (2) des Rumpfes (1) eines Flugzeugs angeordneten Triebwerk (10) sowie zumindest einer Propeller-Einrichtung, wobei eine Propellerwelle des Propellers (6, 7) über zumindest eine Übergangswelle (12) mit einer Welle (21) des Triebwerks (10) verbunden ist, wobei die Propeller-Einrichtung in einer Gondel (4) angeordnet ist, welche über zumindest einen Pylon (3) mit dem Rumpf (1) des Flugzeugs verbunden ist, und wobei ein Abgasauslass (15) des Triebwerks im Heck (2) des Flugzeugrumpfes (1) angeordnet ist, **dadurch gekennzeichnet, dass** ein Untersetzungsgetriebe (13) in der Gondel (4) angeordnet ist, welches von einer Übergangswelle (12) angetrieben wird und mit der Propellerwelle verbunden ist, dass ein Lufteinlass (14) des Triebwerks (10) im Pylon (3) ausgebildet ist.

2. Flugzeug nach Anspruch 1, **dadurch gekennzeichnet, dass** die Propeller-Einrichtung einen gegenläufigen Doppelpropeller (6, 7) umfasst.

3. Flugzeug nach Anspruch 1, **dadurch gekennzeichnet, dass** die Propeller-Einrichtung einen einzelnen Propeller umfasst.

4. Anordnung nach einem der Ansprüche 1 bis 3, **dadurch gekennzeichnet, dass** die Gondel (4) um ihre Querachse schwenkbar ist.

5. Anordnung nach einem der Ansprüche 1 bis 4, **dadurch gekennzeichnet, dass** die Propellerwelle als Koaxialwelle ausgebildet ist.

6. Flugzeug nach einem der Ansprüche 1 bis 5, **dadurch gekennzeichnet, dass** die Propeller-Einrichtung als Traktor-Propeller-Einrichtung ausgebildet ist.

7. Flugzeug nach einem der Ansprüche 1 bis 5, **dadurch gekennzeichnet, dass** die Propeller-Einrichtung als Pusher-Propeller-Einrichtung ausgebildet ist.

8. Flugzeug nach einem der Ansprüche 1 bis 7, **dadurch gekennzeichnet, dass** das Triebwerk als Fluggasturbine oder als Kolbenmotor oder als Wankelmotor oder als Kernreaktorantrieb ausgebildet ist.

9. Flugzeug mit einer Flugzeug-Triebwerksanordnung nach einem der Ansprüche 1 bis 8.

10. Flugzeug nach Anspruch 9 mit zwei symmetrisch zur Längsachse des Flugzeugs angeordneten Flugzeug-Triebwerksanordnungen.

## Claims

1. Aircraft with tail propeller-engine layout with at least one engine (10) arranged in the tail (2) of the fuselage (1) of an aircraft and with at least one propeller assembly, with the shaft of the propeller (6, 7) being connected to a shaft (21) of the engine (10) via at least one transfer shaft (12), with the propeller assembly being disposed in a nacelle (4), which is connected to the fuselage (1) of the aircraft via at least one pylon (3), and with an exhaust gas outlet (15) of the engine being arranged in the tail (2) of the aircraft fuselage (1), **characterized in that** a reduction gear drive (13) is arranged in the nacelle (4), which is driven by a transfer shaft (12) and connected to the propeller shaft, and that an air inlet (14) of the engine (10) is provided in the pylon (3).

2. Aircraft in accordance with Claim 1, **characterized in that** the propeller assembly includes a counter-rotating twin-propeller (6, 7).

3. Aircraft in accordance with Claim 1, **characterized in that** the propeller assembly includes a single propeller.

4. Layout in accordance with one of the Claims 1 to 3, **characterized in that** the nacelle (4) is swivellable about its transverse axis.

5. Layout in accordance with one of the Claims 1 to 4, **characterized in that** the propeller shaft is designed as coaxial shaft.

6. Aircraft in accordance with one of the Claims 1 to 5, **characterized in that** the propeller assembly is designed as a tractor-type propeller assembly.

7. Aircraft in accordance with one of the Claims 1 to 5, **characterized in that** the propeller assembly is designed as a pusher-type propeller assembly.

8. Aircraft in accordance with one of the Claims 1 to 7, **characterized in that** the engine is designed as an aircraft gas turbine, or as a piston engine, or as a rotary engine, or as a nuclear reactor.

9. Aircraft having an aircraft-engine layout in accordance with one of the Claims 1 to 8.

10. Aircraft in accordance with Claim 9 having two aircraft-engine layouts symmetrically arranged to the longitudinal axis of the aircraft.

## Revendications

1. Avion doté d'un agencement de moteur à hélice à l'arrière, comprenant au moins un moteur (10) placé dans la queue (2) du fuselage (1) d'un avion ainsi qu'au moins un dispositif à hélice, sachant qu'un arbre de l'hélice (6, 7) est relié à un arbre (21) du moteur (10) par au moins un arbre de transmission (12), que le dispositif à hélice est placé dans une nacelle (4) qui est reliée au fuselage (1) de l'avion par au moins un pylône (3), et qu'une sortie de gaz d'échappement (15) du moteur est disposée dans la queue (2) du fuselage (1) de l'avion, **caractérisé en ce que** dans la nacelle (4) est placé un démultiplicateur (13) qui est entraîné par un arbre de transmission (12) et relié à l'arbre d'hélice, et qu'une prise d'air (14) du moteur (10) est prévue dans le pylône (3).

2. Avion selon la revendication n° 1, **caractérisé en ce que** le dispositif à hélice comprend une double hélice contrarotative (6, 7).

3. Avion selon la revendication n° 1, **caractérisé en ce que** le dispositif à hélice comprend une seule hélice.

4. Agencement selon une des revendications n° 1 à n° 3, **caractérisé en ce que** la nacelle (4) peut pivoter autour de son axe transversal.

5. Agencement selon une des revendications n° 1 à n° 4, **caractérisé en ce que** l'arbre d'hélice est conçu en tant qu'arbre coaxial.

6. Avion selon une des revendications n° 1 à n° 5, **caractérisé en ce que** le dispositif à hélice est conçu en tant que dispositif à hélice tractive.

7. Avion selon une des revendications n° 1 à n° 5, **caractérisé en ce que** le dispositif à hélice est conçu en tant que dispositif à hélice propulsive.

8. Avion selon une des revendications n° 1 à n° 7, **caractérisé en ce que** le moteur est conçu en tant que turbine à gaz aéronautique ou moteur à piston ou moteur à piston rotatif Wankel ou moteur à réacteur nucléaire.

9. Avion doté d'un agencement de moteur aéronautique selon une des revendications n° 1 à n° 8.

10. Avion selon la revendication n° 9 doté de deux agencements de moteurs aéronautiques disposés symétriquement par rapport à l'axe longitudinal de l'avion.
